# EUROPÄISCHE PATENTSCHRIFT

(11) **EP 1 994 213 B1**
(45) Veröffentlichungstag und Bekanntmachung des Hinweises auf die Patenterteilung: **12.08.2015**
(21) Anmeldenummer: 07711672.1
(22) Anmeldetag: 27.02.2007
(51) Int. Cl.: D04H 3/12, B29B 15/12, D04H 1/60, D04H 1/62, D04H 1/64, D04H 1/66

(54) **VERFAHREN ZUM HERSTELLEN VON VERFESTIGTEN GELEGTEN STRUKTUREN**
METHOD OF FABRICATION OF REINFORCED STRUCTURES
PROCÉDÉ DE FABRICATION DE STRUCTURES RENFORCÉES

(30) Priorität: 03.03.2006 EP 06004297; 01.12.2006 EP 06024883
(43) Veröffentlichungstag der Anmeldung: 26.11.2008
(73) Patentinhaber: Toho Tenax Europe GmbH, 42103 Wuppertal (DE)
(72) Erfinder: WOHLMANN, Bernd, 40267 Düsseldorf (DE); WÖGINGER, Andreas, 42287 Wuppertal (DE)
(74) Vertreter: Schröder, Richard
(86) Internationale Anmeldenummer: PCT/EP2007/001650
(87) Internationale Veröffentlichungsnummer: WO 2007/101578

(56) Entgegenhaltungen:
- EP-A- 0 038 887
- WO-A-98/22644
- WO-A-2005/095080
- US-A- 3 962 486
- US-A- 6 086 813
- US-A1- 2002 034 624
- US-A1- 2002 071 907

## Beschreibung

Die Erfindung betrifft ein Verfahren zum Herstellen von verfestigten gelegten Strukturen aus Garnen sowie ein Verfahren zur Herstellung eines faserverstärkten Verbundwerkstoffes aus derartigen gelegten Strukturen.

Zur Herstellung von faserverstärkten Verbundwerkstoffen werden einerseits textile Flächengebilde wie Gewebe oder Gelege, andererseits direkt gelegte Strukturen eingesetzt. Textile Flächengebilde sind in der Regel leicht handhabbar, sind aber zur Herstellung von faserverstärkten Verbundwerkstoffen mit komplizierten und/oder dreidimensionalen Formen weniger geeignet. Zu diesem Zweck werden gelegte Strukturen empfohlen. Beispielsweise werden in DE 201 20 447 Garne zu einer gelegten Struktur gefügt, wonach ein thermisch schmelzbares Material in Pulverform aufgestreut, anschließend erhitzt und verfestigt wird. Auf diese Weise entsteht ein Vorformling, welcher gegebenenfalls mit anderen Vorformlingen zusammen zu einem Verbundwerkstoff weiterverarbeitet werden kann. Dieses Verfahren ist für komplizierte und/oder dreidimensionale Gebilde nur bedingt geeignet, da nur solche Gebilde hergestellt werden können, bei denen die Garne nach dem Legen an dem vorgesehenen Platz liegen bleiben und nicht ab- oder zusammenrutschen, weil bei diesem Verfahren die Garne während des Verfestigungsvorganges nur bedingt festgehalten werden können.

Ein weiteres Verfahren zur Herstellung von Vorformlingen ist in WO 2005/095080 A1 beschrieben, bei dem das Verstärkungsgam zunächst mit einem thermisch schmelzbarem Material imprägniert wird, wonach die Garne zu gelegten Strukturen gefügt und erhitzt werden, damit die Garne miteinander verbunden werden, um eine verfestigte gelegte Struktur zu bilden. Da bereits beim Legen der Garne, welche auch in breitgelegter Form, beispielsweise in Form eines flachen Bandes (tape) eingesetzt werden, das thermisch schmelzbare Material der Imprägnierung zumindest oberflächlich angeschmolzen werden kann und somit bereits beim Legen benachbarte oder sich kreuzende Garne durch Verfestigen des angeschmolzenen Materials miteinander verbunden werden können, können nach diesem Verfahren somit auch kompliziertere und/oder dreidimensionale Strukturen erzeugt werden. Allerdings ist das dort beschriebene gesamte Verfahren noch sehr zeitaufwändig.

Ein weiteres Verfahren zur Herstellung von verfestigten gelegten Strukturen ist im US 2002/0071907 offenbart.

Aufgabe der vorliegenden Erfindung ist es deshalb, ein Verfahren zum Herstellen von verfestigten gelegten Strukturen aus Garnen zur Verfügung zu stellen, mit denen auch kompliziertere und/oder dreidimensionale Strukturen in relativ kurzer Zeit direkt hergestellt werden können. Weiterhin ist es Aufgabe der vorliegenden Erfindung, ein Verfahren zur Herstellung von faserverstärkten Verbundwerkstoffen unter Verwendung der erfindungsgemäß hergestellten verfestigten gelegten Strukturen zur Verfügung zu stellen.

Diese Aufgabe wird bei einem Verfahren zum Herstellen von verfestigten gelegten Strukturen aus Garnen dadurch gelöst, dass auf die Garne zumindest an ihren Berühr- oder Kreuzungspunkten ein thermisch schmelzbares Material über ein thermisches Spritzverfahren aufgebracht wird, wonach die Garne zusammengeführt werden, während sich das über das thermische Spritzverfahren aufgebrachte thermisch schmelzbare Material noch in einem plastischen beziehungsweise geschmolzenen Zustand befindet.

Der Begriff "thermisches Spritzverfahren" ist in DIN 657:2005 definiert. In dieser Norm sind unterschiedliche Spritzverfahren zusammengefasst, die nach Art des Spritzzusatzstoffes, der Fertigung und/oder des Energieträgers unterteilt sind. Von diesen thermischen Spritzverfahren werden insbesondere die Verfahren bevorzugt, die das thermisch schmelzbare Material schmelzen und möglichst in Form von winzigen Tröpfchen auf den Ablagekörper und / oder auf das Garn bevorzugt mit hoher Geschwindigkeit schleudern. Der Ablagekörper ist entweder eine endkontumahe Form oder eine Schicht, die bereits auf dieser endkontumahen Form abgelegt wurde.

Über diese thermische Spritzverfahren lassen sich genau dosierbare Mengen an plastifiziertem, bevorzugt noch geschmolzenem thermisch schmelzbaren Material auf die Garne aufbringen. Insofern wird es über das erfindungsgemäße Verfahren möglich, die Auftragung des plastifizierten, bevorzugt noch geschmolzenen thermisch schmelzbaren Materials hinsichtlich Auftragsmenge so zu steuern, dass einerseits eine gute Bindung zwischen benachbarten Garnen gewährleistet ist und andererseits die zum Verfestigen des plastifizierten, bevorzugt noch geschmolzenen thermisch schmelzbaren Materials erforderliche Abkühlphase zu verkürzen.

Besonders bewährt hat sich bei dem erfindungsgemäßen Verfahren, wenn das thermisch schmelzbare Material über thermisches Spritzen mit Pulver aufgebracht wird, wobei das Pulver das thermisch schmelzbare Material ist. Über dieses Verfahren ist in sehr kurzer Zeit die notwendige Menge an geschmolzenem thermisch schmelzbarem Material bereitgestellt, um ein Garn mit einem weiteren Garn an ihren Berührungsstellen beziehungsweise Kreuzungsstellen zu verbinden.

Hierbei hat es sich besonders bewährt, wenn als Energieträger ein Plasmastrahl eingesetzt wird.

Zur Herstellung der erfindungsgemäßen gelegten Strukturen sollte als thermisch schmelzbares Material ein solches eingesetzt werden, welches mit dem zur Herstellung des faserverstärkten Verbundwerkstoffes zu verwendenden Materials gute Haftungseigenschaften aufweist. Geeignete Materialien sind praktisch alle Materialien, die als Matrix in Verbundwerkstoffen eingesetzt werden und thermisch schmelzbar sind. Dies sind insbesondere aliphatische Polyamide, aromatische Polyamide, thermoplastische Polyimide, Polyarylenethersulfone, Polyarylenetherketone, Polyphenylensulfide, Polybenzimidazole, flüssig kristalline Polymere und thermoplastisch sich verhaltende Duromere. Bevorzugt werden beim thermischen Spritzen ähnliche, insbesondere dieselben Polymere eingesetzt, die später auch als Matrix für den Verbundwerkstoff verwendet werden. Es lassen sich aber auch Schichten zwischen den einzeln abgelegten Schichten einbringen, die besondere Funktionen wie zum Beispiel Stoppen des Rissfortschrittes im Versagensfall ermöglichen. Als Garne kommen praktisch alle Garne in Frage, die zur Herstellung von faserverstärkten Verbundwerkstoffen geeignet sind. Fasern aus Glas, Quarz, Aramid, Siliconkarbid oder Kohlenstoff sind bestens geeignet.

Besonders vorteilhaft zeichnet sich das erfindungsgemäße Verfahren dadurch aus, dass die Garne über ihre gesamte Länge während des Ablegeverfahrens über das thermische Spritzen mit dem thermisch schmelzbaren Material beaufschlagt werde.

Es hat sich auch als Vorteil herausgestellt, wenn Garne eingesetzt werden, die bereits mit einem thermisch schmelzbarem Material beaufschlagt sind. Insbesondere können solche Garne eingesetzt werden, die bereits mit einem thermisch schmelzbaren Material imprägniert sind. Hierzu sind die in WO 2005/095080 A1 beschriebenen imprägnierten Garne bestens geeignet.

Von den beschichteten beziehungsweise imprägnierten Garnen haben sich insbesondere solche als vorteilhaft herausgestellt, welche Garne sehr flach ausgebildet sind und insofern die Form eines Bandes aufweisen. Derartige Garne sind beispielsweise in EP 0 937 560, EP 1 281 498 und US 4 900 499 beschrieben.

Das erfindungsgemäße Verfahren gelingt vorzüglich, wenn das über thermisches Spritzen aufzubringende Material ein thermoplastisch sich verhaltendes Material, bevorzugt ein thermoplastisches Material ist.

Die erfindungsgemäß gestellte Aufgabe wird auch gelöst durch ein Verfahren zur Herstellung eines faserverstärkten Verbundwerkstoffes, welches sich dadurch auszeichnet, dass zunächst erfindungsgemäße gelegte Strukturen hergestellt werden und danach, gegebenenfalls unter Zugabe von weiterem thermisch schmelzbarem Material, unter Wärme und Druck zum faserverstärkten Verbundwerkstoff geformt werden.

Bevorzugt besteht das zum thermischen Spritzen verwendete schmelzbare Material, das gegebenenfalls zum Beaufschlagen beziehungsweise Imprägnieren der Garne verwendete schmelzbare Material und das beim Herstellen des Verbundkörpers eingesetzte schmelzbare Material aus ähnlichen Polymeren, insbesondere aus denselben Polymeren.

## Patentansprüche

1. Verfahren zum Herstellen von verfestigten gelegten Strukturen aus Garnen, **dadurch gekennzeichnet, dass** während des Ablegeverfahrens auf die Garne über ihre gesamte Länge ein thermisch schmelzbares Material über ein thermisches Spritzverfahren aufgebracht wird, wonach die Garne zusammengeführt werden, während sich das über das thermische Spritzverfahren aufgebrachte thermisch schmelzbare Material noch in einem plastischen beziehungsweise geschmolzenen Zustand befindet.

2. Verfahren nach Anspruch 1, **dadurch gekennzeichnet, dass** Garne eingesetzt werden, die bereits mit einem thermisch schmelzbarem Material beaufschlagt sind.

3. Verfahren nach Anspruch 2, **dadurch gekennzeichnet, dass** Garne eingesetzt werden, die bereits mit einem thermisch schmelzbaren Material imprägniert sind.

4. Verfahren nach Anspruch 2 oder 3, **dadurch gekennzeichnet, dass** die Garne die Form eines Bandes aufweisen.

5. Verfahren nach einem oder mehreren der Ansprüche 1 bis 4, **dadurch gekennzeichnet, dass** über das thermische Spritzen Pulver aufgebracht wird, wobei das Pulver das thermisch schmelzbare Material ist.

6. Verfahren nach einem oder mehreren der Ansprüche 1 bis 5, **dadurch gekennzeichnet, dass** als Energieträger ein Plasmastrahl eingesetzt wird.

7. Verfahren nach einem oder mehreren der Ansprüche 1 bis6, **dadurch gekennzeichnet, dass** das über thermisches Spritzen aufzubringende Material ein sich thermoplastisch verhaltendes Material ist.

8. Verfahren nach einem oder mehreren der Ansprüche 1 bis7, **dadurch gekennzeichnet, dass** das über thermisches Spritzen aufzubringende Material ein thermoplastisches Material ist.

9. Verfahren zur Herstellung eines faserverstärkten Verbundwerkstoffes, **dadurch gekennzeichnet, dass** zunächst gelegte Strukturen nach dem Verfahren gemäß Anspruch 1 bis 8hergestellt werden und danach, gegebenenfalls unter Zugabe von weiterem thermisch schmelzbarem Material, unter Wärme und Druck zum faserverstärkten Verbundwerkstoff geformt werden.

10. Verfahren nach Anspruch9, **dadurch gekennzeichnet, dass** das zum thermischen Spritzen verwendete schmelzbare Material, das gegebenenfalls zum Beaufschlagen beziehungsweise Imprägnieren der Garne verwendete schmelzbare Material und das beim Herstellen des Verbundkörpers eingesetzte schmelzbare Material aus ähnlichen Polymeren besteht.

11. Verfahren nach Anspruch9, **dadurch gekennzeichnet, dass** das zum thermischen Spritzen verwendete schmelzbare Material, das gegebenenfalls zum Beaufschlagen beziehungsweise Imprägnieren der Garne verwendete schmelzbare Material und das beim Herstellen des Verbundkörpers eingesetzte schmelzbare Material aus denselben Polymeren besteht.

## Claims

1. A process for the manufacture of bonded laid structures from yarns, **characterized in that** during the laying process a thermally fusible material is applied to the yarns over their entire length via a thermal spray process and the yarns are subsequently brought together while the thermally fusible material, applied via the thermal spray process, is still in a plastic or molten state.

2. A process according to Claim 1, **characterized in that** yarns are used that are already coated with a thermally fusible material.

3. A process according to Claim 2, **characterized in that** yarns are used that are already impregnated with a thermally fusible material.

4. A process according to Claim 2 or 3, **characterized in that** the yarns are in the form of a ribbon.

5. A process according to one or more of Claims 1 to 4, **characterized in that** powder is applied via the thermal spraying, wherein the powder is the thermally fusible material.

6. A process according to one or more of Claims 1 to 5, **characterized in that** a plasma jet is used for the energy source.

7. A process according to one or more of Claims 1 to 6, **characterized in that** the material to be applied via thermal spraying is a material that has a thermoplastic behavior.

8. A process according to one or more of Claims 1 to 7, **characterized in that** the material to be applied via thermal spraying is a thermoplastic material.

9. A process for the manufacture of a fiber-reinforced composite material, **characterized in that**, initially, laid structures are manufactured according to the process according to Claims 1 to 8 and subsequently, with the addition of further thermally fusible material if necessary, the structures are molded under heat and pressure into the fiber-reinforced composite material.

10. A process according to Claim 9, **characterized in that** the fusible material used for the thermal spraying, the fusible material used if necessary for coating or impregnating the yarns, and the fusible material used for manufacturing the composite body consist of similar polymers.

11. A process according to Claim 9, **characterized in that** the fusible material used for the thermal spraying, the fusible material used if necessary for coating or impregnating the yarns, and the fusible material used for manufacturing the composite body consist of the same polymers.

## Revendications

1. Procédé de fabrication de structures déposées, durcies, constituées de fils, **caractérisé en ce que** pendant le processus de dépôt un matériau thermofusible est apporté sur les fils sur toute leur longueur selon un procédé de projection thermique, après quoi les fils sont rassemblés pendant que le matériau fusible apporté par le procédé de projection thermique se trouve encore dans un état plastique ou fondu.

2. Procédé selon la revendication 1 **caractérisé en ce que** l'on met en oeuvre des fils qui ont déjà été soumis à un matériau thermofusible.

3. Procédé selon la revendication 2 **caractérisé en ce que** l'on met en oeuvre des fils qui ont déjà été imprégnés avec un matériau thermofusible.

4. Procédé selon la revendication 2 ou 3 **caractérisé en ce que** les fils se présentent sous forme de bande.

5. Procédé selon une ou plusieurs des revendications 1 à 4 **caractérisé en ce qu'**une poudre est apportée au cours de la projection thermique, la poudre étant le matériau thermofusible.

6. Procédé selon une ou plusieurs des revendications 1 à 5 **caractérisé en ce qu'**on utilise un jet de plasma en tant que support d'énergie.

7. Procédé selon une ou plusieurs des revendications 1 à 6 **caractérisé en ce que** le matériau qui doit être apporté par projection thermique est un matériau à comportement thermoplastique.

8. Procédé selon une ou plusieurs des revendications 1 à 7 **caractérisé en ce que** le matériau qui doit être apporté par projection thermique est un matériau thermoplastique.

9. Procédé de fabrication d'un matériau composite renforcé de fibres **caractérisé en ce qu'**on fabrique d'abord par le procédé selon les revendications 1 à 8 des structures déposées et qu'ensuite celles-ci sont mises en forme de matériau composite renforcé de fibres sous l'effet de chaleur et de pression, le cas échéant avec apport d'un matériau thermofusible supplémentaire.

10. Procédé selon la revendication 9 **caractérisé en ce que** le matériau fusible utilisé pour la projection thermique, le cas échéant le matériau fusible utilisé pour l'apport sur les fils ou par imprégnation des fils et le matériau fusible mis en oeuvre lors de la fabrication du corps composite, sont constitués de polymères analogues.

11. Procédé selon la revendication 9 **caractérisé en ce que** le matériau fusible utilisé pour la projection thermique, le matériau fusible utilisé le cas échéant pour l'apport sur les fils ou pour imprégnation des fils et le matériau fusible mis en oeuvre lors de la fabrication du corps composite, sont constitués de polymères identiques.
